Europäisches Patentamt

European Patent Office

Office européen des brevets

(19)

(11) **EP 1 031 633 A1**

(12) **DEMANDE DE BREVET EUROPEEN**

(43) Date de publication:
**30.08.2000 Bulletin 2000/35**

(51) Int Cl.⁷: **C22B 3/00**, C22B 3/02, C22B 7/00, C22B 47/00, C25B 11/02, C25B 9/00

(21) Numéro de dépôt: **99200513.2**

(22) Date de dépôt: **23.02.1999**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **Ateliers De Monsville S.A.**
**7390 Quaregnon (BE)**

(72) Inventeurs:
• **Henry, Philippe**
  **1450 Chastre (BE)**

• **Van Lierde, André**
  **1180 Bruxelles (BE)**

(74) Mandataire: **Quintelier, Claude et al**
  **Gevers & Vander Haeghen,**
  **Patent Attorneys,**
  **Rue de Livourne 7**
  **1060 Brussels (BE)**

(54) **Cellule électrochimique de type filtre-presse destinée à la lixiviation de pulpes contenant des métaux valables**

(57)    Cellule électrochimique de type filtre-presse destinée en particulier à l'électrolixiviation de métaux comportant au moins une première et une seconde électrode, au moins une électrode est tridimensionnelle, l'électrode tridimensionnelle comprenant une superposition d'au moins une première grille ondulée et d'au moins une deuxième grille plane en métal, l'ondulation de la première grille et la distance entre la première et la deuxième grille étant agencée de façon à permettre le passage de pulpes.

FIGURE 4

EP 1 031 633 A1

**Description**

La présente invention concerne une cellule électrochimique de type filtre-presse destinée en particulier à l'électrolixiviation de métaux.

De telles cellules électrochimiques de type filtre-presse sont décrites par Colin Oloman dans son livre: "Electrochemical Processing for the Pulp and Paper Industry" paru chez Alresford Press Ltd, Alresford, Hants, Angleterre (1996).

Ces cellules sont utilisées actuellement pour le traitement industriel de solutions exemptes de solides, notamment pour l'électrosynthèse organique mais aussi dans le cadre de la production de chlore et du traitement d'effluents liquides. Nous pouvons citer, à titre d'exemple, l'électrodialyse pour régénérer les acides et les bases, l'électrolyse directe de solutions diluées et la destruction électrochimique de cyanures, de nitrate, d'ammoniaque et de produits organiques divers.

Les cellules connues présentent l'inconvénient de ne pas être appropriées pour le traitement de pulpes. Ces pulpes doivent être traitées par d'autres types de cellules électrochimiques dont le rendement est généralement faible à haute densité de courant, ou par les voies chimiques classiques, ce qui implique la consommation excessive de réducteurs ou d'oxydants chimiques qui sont en général très polluants et coûteux.

L'invention a pour but de réaliser une cellule électrochimique de type filtre-presse pouvant être utilisée dans tous les cas cités ci-dessus, dont les caractéristiques permettent de traiter des pulpes aussi bien que des liquides avec une productivité élevée, un meilleur rendement et un coût faible tout en diminuant sensiblement les problèmes de pollution.

A cette fin, une cellule électrochimique de type filtre-presse suivant l'invention est caractérisée en ce que au moins une électrode est tridimensionnelle, l'électrode tridimensionnelle comprenant une superposition d'au moins une première grille ondulée et d'au moins une deuxième grille plane en métal, l'ondulation de la première grille étant agencée de façon à ce que l'espace ménagé entre la première et la deuxième grille au niveau de l'ondulation ait une hauteur suffisante pour permettre l'écoulement fluide sensiblement uniforme de pulpes.

La configuration de l'électrode tridimensionnelle permet un écoulement fluide sensiblement uniforme des pulpes à travers la cellule électrochimique sans provoquer de bouchage et en minimisant la décantation de pulpe.

La seconde électrode, est composée dans un premier exemple de réalisation de la présente invention, de préférence d'un alliage Plomb-Argent. Cet alliage possède des propriétés mécaniques meilleures que le plomb seul car dans un alliage Plomb-Argent, l'argent ne recouvre pas les grains de plomb de façon uniforme et le poids d'argent est d'environ 2,4% au niveau des joints des grains, cette teneur élevée d'argent donnant plus de solidité à l'électrode composée de Plomb-Argent. Cet alliage présente également une résistance élevée à la corrosion grâce à la formation d'une couche superficielle de $\beta$-$PbO_2$ (oxyde de plomb) à grains fins. De plus, la présence d'argent à des teneurs comprises de préférence entre 0,5 et 1% entraîne l'apparition d'un effet électrocatalytique marqué. L'argent améliore en effet la conductivité de la couche d'oxyde de plomb, ce qui favorise le dégagement d'oxygène.

La présente invention sera maintenant décrite plus en détails à l'aide du dessin qui reprend un exemple de réalisation d'une cellule électrochimique suivant l'invention.

Figure 1: montre un schéma général d'une cellule électrochimique selon l'invention.

Figure 2 a): montre un schéma d'une cellule de type filtre-presse fonctionnant en mode bipolaire.

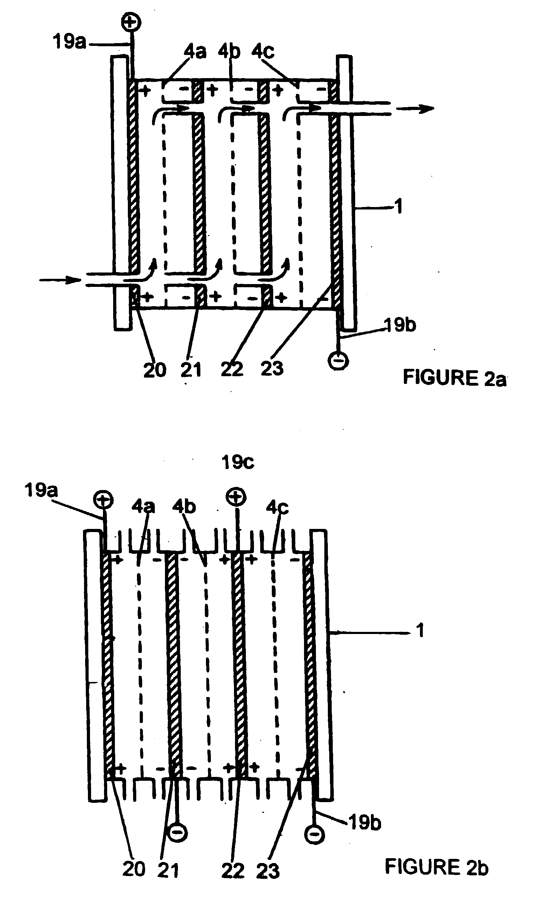

Figure 2 b): montre un schéma d'une cellule de type filtre-presse fonctionnant en mode monopolaire.

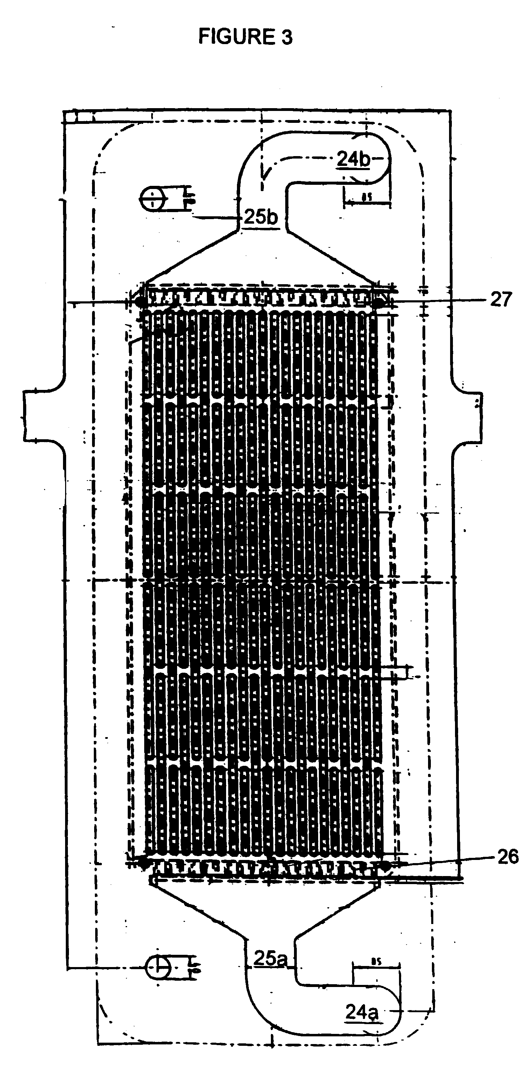

Figure 3: montre un schéma du compartiment cathodique de la cellule électrochimique

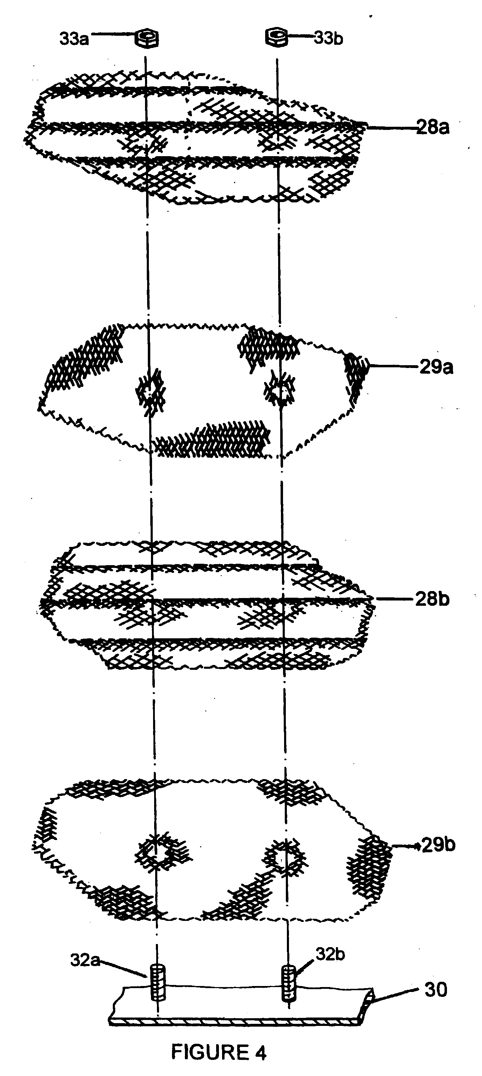

Figure 4: montre une vue éclatée de l'électrode tridimensionnelle de la présente invention.

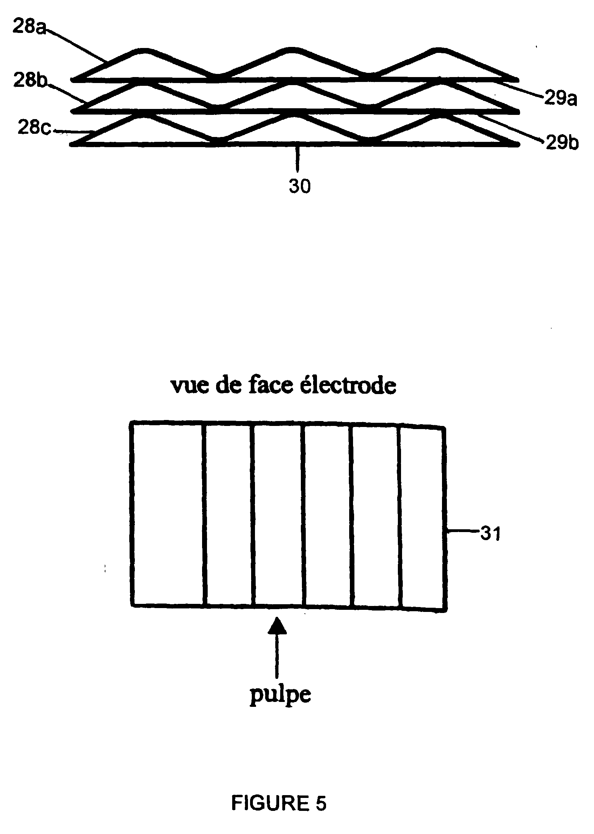

Figure 5: montre un schéma de l'empilement de la structure tridimensionnelle de l'électrode.

La cellule électrochimique de type filtre-presse à électrode tridimensionnelle selon la présente invention est décrite en se référant à un exemple d'utilisation qui est l'électrolixiviation de résidus d'oxyde de manganèse ($MnO_2$). Toutefois, l'utilisation de cette cellule n'est pas limitée à cet exemple, d'autres traitements électrochimiques sont également possibles.

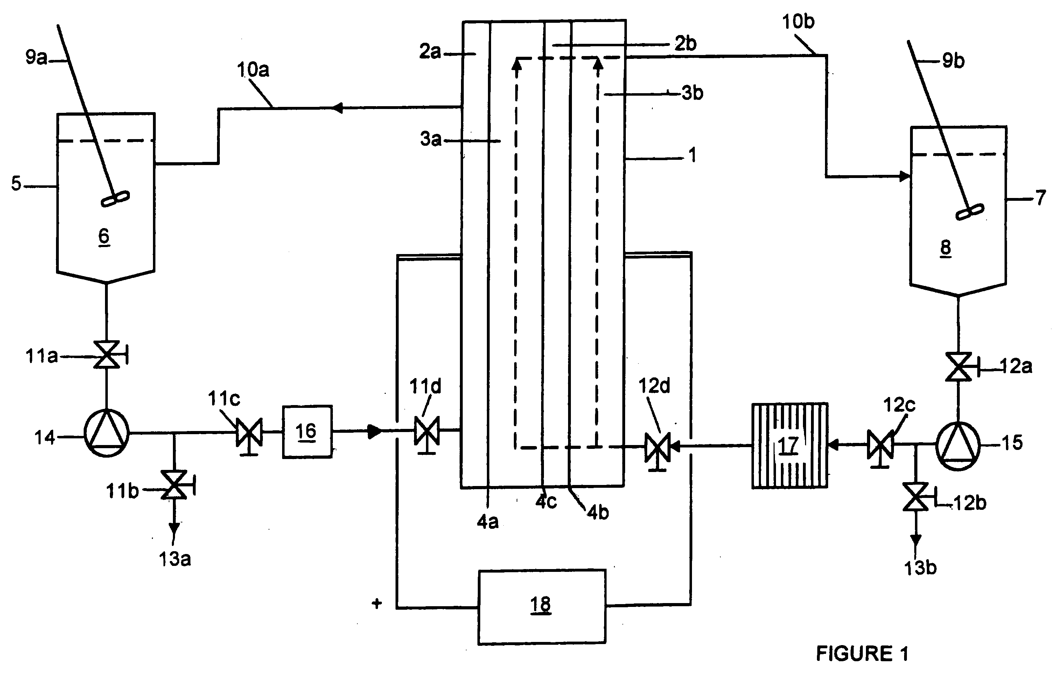

Selon la figure 1, une cellule de type filtre-presse (1) composée, dans cet exemple, de deux compartiments anodiques (2a, 2b) et de deux compartiments cathodiques (3a, 3b) séparés par un séparateur (4a, 4b) qui est dans cet exemple un diaphragme perméable aux protons. La structure de l'électrode bipolaire (4c) sera détaillée sur les figures 4 et 5.

La cellule est reliée d'un côté à une première cuve (5) contenant l'anolyte (6) et de l'autre côté à une deuxième cuve (7) contenant le catholyte (8). Ces deux cuves sont pourvues d'un agitateur à hélice (9a, 9b), lesdites cuves faisant partie d'un circuit d'alimentation (10a, 10b) des deux compartiments anodiques et cathodiques. Ces circuits comprennent des vannes (11a, 11b, 11c, 11d; 12a, 12b, 12c, 12d) permettant d'effectuer des prélèvements en cours d'essai et de vider les cuves en fin d'essai grâce à des purges (13a, 13b).

L'anolyte (6) et le catholyte (8) sont véhiculés jusqu'aux compartiments anodiques et cathodiques à l'aide, respectivement d'une pompe centrifuge (14) et d'une pompe à membrane (15) faisant partie du circuit d'alimentation.

Des systèmes de chauffage (16, 17) sont également intégrés dans le circuit pour permettre de conserver l'anolyte et le catholyte à une température sensiblement constante, par exemple, de 50°C. Dans cet exemple où la cellule électrochimique fonctionne en mode bipolaire (Figure 2a), elle est reliée à un redresseur de courant AC/DC (18).

En mode bipolaire (Figure 2a), un contact électrique (19a, 19b) est appliqué seulement aux électrodes externes (20,23). Il s'établit alors une différence de potentiel entre les différentes électrodes (20, 21, 22, 23) de la cellule dont chaque face a une polarité opposée à l'inverse de ce qui existe dans le cas de connexions monopolaires (Figure 2b).

Outre un mode de connexion simplifié, les connexions bipolaires présentent l'avantage de travailler avec des courants faibles mais à haut voltage, ce qui est plus économique d'un point de vue énergétique car les redresseurs haut voltage - bas courant (18) sont peu coûteux et les rendements de conversion AC/DC sont élevés, la consommation de courant est donc faible.

Dans le mode de réalisation décrit pour l'électrolixiviation de résidus de manganèse, des dimensions préférentielles sont indiquées, il est bien entendu que d'autres dimensions sont également possibles.

La pulpe constituant le catholyte est transportée dans le compartiment cathodique (Figure 3) où elle pénètre par un système d'entrée/sortie (24a, 24b) transversale, c'est-à-dire perpendiculaire à l'écoulement au sein de l'électrode tridimensionnelle.

L'électrode tridimensionnelle comporte au moins deux éléments d'électrode ondulés (Figures 4 et 5: 28a, 28b,) en acier inoxydable déployé, empilés en alternance avec deux éléments d'électrode planes (29a, 29b) également en acier inoxydable déployé. Les éléments d'électrode sont fixés ensembles au moyen, par exemple de vis (32a, 32b) et d'écrous (33a, 33b), et sur la plaque plane (30) collectrice de courant, en acier inoxydable. Davantage d'électrodes peuvent être empilées mais la présence de plaques ondulées est importante pour permettre un écoulement fluide sensiblement uniforme des pulpes. La hauteur de l'ondulation doit être d'au moins 1 mm (Figure 5, h) et elle varie en fonction de la granulométrie de la pulpe traitée dans la cellule de la présente invention.

La porosité de l'acier inoxydable déployé permet d'éviter le bouchage par la pulpe et des pertes de charges importantes car la résistance à l'écoulement du fluide est moins élevée. De plus, c'est un matériau possédant une résistance mécanique et chimique appropriées et son coût est peu élevé.

Le système d'entrée/sortie de la pulpe consiste de préférence en un canal (25a, 25b) d'environ 85 mm de largeur, d'une épaisseur d'environ 10 mm en queue d'aronde, terminé par une série de vingt conduits (26) de 8 mm de diamètre répartis sur la largeur de la cellule, assurant une distribution adéquate de la pulpe dans l'électrode tridimensionnelle (Figures 4 et 5). Une zone de transition (27) de 15 mm formée par un espace libre a été usinée à la sortie de ces conduits pour éviter le bouchage et favoriser la fluidité de la pulpe. De plus, la structure tridimensionnelle de la cathode (Figure 5) facilite également le passage sensiblement uniforme de la pulpe.

La vue de face (31) de l'électrode montre le sens de passage de la pulpe à travers les passages ménagés par l'alternance de grilles planes et de grilles ondulées dans l'électrode tridimensionnelle.

L'anode sur laquelle s'effectue le dégagement d'oxygène est une électrode plane pourvue de stries suivant un sens sensiblement parallèle à la circulation de la pulpe. L'anode est composée d'un alliage Plomb-Argent (0,7%) dans cet exemple, mais d'autres compositions sont possibles, selon l'utilisation de la cellule électrochimique.

Exemple 1: <u>Electrolixiviation de résidus de MnO$_2$</u>

Les résidus de MnO$_2$ traités dans cette cellule ont une composition chimique très hétérogène, ils comprennent: du manganèse, du fer, du nickel, du cobalt, de l'aluminium dans des proportions différentes selon les échantillons. De plus, leur granulométrie est variable, de 20 à 250 $\mu$m.

La cellule électrochimique de type filtre-presse de l'invention est capable de traiter ces résidus de façon à assurer la valorisation optimale des éléments utiles Manganèse, Nickel et Cobalt.

Dans cet exemple d'utilisation, le manganèse du résidu de MnO$_2$ est lixivié électrochimiquement en milieu acide dans la cellule électrochimique (Figure 1 ) de la présente invention.

Une pulpe formée par le mélange d'une solution d'acide sulfurique et de résidus de MnO$_2$ constitue le catholyte (8). La réduction du manganèse quadrivalent en manganèse bivalent s'effectue in situ dans les compartiments cathodiques (3a, 3b) de la cellule grâce à la régénération continue par voie électrochimique du Fe$^{2+}$ oxydé en Fe$^{3+}$ lors de la réduction du manganèse de la valence +4 à la valence +2.

Le transfert d'électrons à la cathode est le suivant:

$$4Fe^{3+} + 4e^{-} \rightarrow 4Fe^{2+}$$

Le transfert d'électrons à l'anode:

$$2H_2O \rightarrow O_2 + 4H^+ + 4e^-$$

La réaction chimique principale entre le $MnO_2$ et les ions $Fe^{2+}$ est la suivante:

$$MnO_2 + 2Fe^{2+} + 4H^+ \rightarrow Mn^{2+} + 2Fe^{3+} + 2H_2O$$

Le $MnO_2$ réagit en milieu faiblement acide ou neutre selon la réaction:

$$MnO_2 + 2FeSO_4 + 2H_2O \rightarrow MnSO_4 + Fe(OH)SO_4 + Fe(OH)_3$$

Une partie du $Fe^{3+}$ peut subir une hydrolyse sous l'action oxydante du $MnO_2$ suivant la réaction:

$$MnO_2 + 2FeSO_4 + 2H_2O \rightarrow Fe_2O_3.H_2O + MnSO_4 + H_2SO_4$$

libérant ainsi une quantité complémentaire d'acide susceptible d'être utilisée pour la réaction de lixiviation du $MnO_2$ proprement dite.

Dans l'exemple d'électrolixiviation de résidus de $MnO_2$, les conditions opératoires sont les suivantes, mais elles peuvent être différentes pour d'autres types de traitements électrochimiques:

Une densité de courant de 1000A/$m^2$ (400A) a été appliquée à la cellule électrochimique. Un ajout étagé d'acide sulfurique dans le compartiment cathodique (3b) permet de réduire d'environ 20% les rendements de dissolution du fer et de l'aluminium sans que cela ne perturbe la lixiviation des métaux utiles, c'est-à-dire le manganèse, le nickel et le cobalt. L'acidité minimale est ainsi maintenue, par exemple, entre 15 et 30g/l.

On règle le débit de circulation du catholyte (8) à environ 4 $m^3$/h ce qui correspond à une vitesse tangentielle de passage de la pulpe dans le compartiment cathodique de 10 cm/sec, ce qui permet d'éviter la décantation des solides les plus gros au sein de la structure tridimensionnelle (Figure 5) de la cathode.

On règle le débit de circulation de l'anolyte (6), constitué d'une solution d'acide sulfurique ($H_2SO_4$) à 150 g/l, à 5 $m^3$/h, ce qui induit une vitesse tangentielle de passage dans le compartiment anodique de 25 cm/sec. Cette vitesse élevée permet d'assurer le dégazage optimal de l'oxygène produit au cours de la réaction et de créer une perte de charge dans le compartiment anodique telle que la pression de l'anolyte soit légèrement supérieure à celle obtenue dans le compartiment cathodique, de manière à limiter la fuite de manganèse par diffusion, du catholyte vers l'anolyte.

L'électrolixiviation des résidus de $MnO_2$ a été réalisée à une température d'environ 50°C de l'anolyte et du catholyte qui sont chauffés par des éléments (16, 17) montrés sur la Figure 1.

Dans ces conditions opératoires, les rendements de dissolution de manganèse, de nickel et de cobalt obtenus sont respectivement d'environ 97%, 94% et 93%. Les rendements faradiques sont proches de 100%.

Les consommations électriques, quant à elles, varient entre 3 et 3,4 kWh/kg de manganèse lixivié.

D'autres exemples d'utilisation de la cellule électrochimique de l'invention sont décrits ci-dessous pour mettre en évidence les qualités de cette cellule de type filtre-presse à électrode tridimensionnelle et son aptitude à être utilisée de façon optimale pour le traitement électrochimique de solides divers.

Exemple 2: Electrolixiviation du $MnO_2$ de "boues" d'électrolyse zinc.

La "boue" traitée se présente sous forme d'agglomérats de $MnO_2$ et $PbSO_4$ d'une granulométrie relativement grossière, 20% des particules étant de dimension supérieure à 1100µm. Son analyse chimique est la suivante: 52,56% Mn; 4,5% Pb; 0,25% Zn; 224g/t Ag; 383g/t Fe; 0,91% Ca; 0,18% Sr et 1% Si.

Après broyage à 80% et électrolixiviation à 50°C sous 1000A/$m^2$, à une dilution de 5l/kg de solide, en milieu $H_2SO_4$ (200-250g/l) en présence de 5g/l Fe$^{3+}$, 98,5% du manganèse est lixivié avec un rendement faradique de 95% pour une consommation électrique de 3kWh/kg Mn lixivié. Le résidu produit, représentant seulement 5% en poids de la matière, titre alors 53% Pb et 1853g/t Ag: il peut être recyclé dans les flow-sheets pyrométallurgiques de traitement de concentrés de plomb.

Exemple 3: Electrolixiviation du $MnO_2$ de piles usées.

Un broyat de piles, titrant notamment 23,6% Zn; 28,4% Mn; 8,8% C; 4,1% Cl; 2,8% K et 1% Fe; est, dans un premier temps, prélixivié à pH 1 en milieu $H_2SO_4$, de manière à solubiliser plus de 93% du zinc et environ 30% du manganèse total.

Le rejet de la prélixiviation est ensuite lixivié dans les mêmes conditions que pour l'électrolixiviation des résidus $MnO_2$ expliqué dans la description de l'invention, le rejet de la prélixiviation contenant essentiellement du $MnO_2$, soit en milieu sulfurique, 5g/l $Fe^{3+}$ étant ajoutés à l'électrolyte, ou en milieu nitrique en jouant sur la réactivité du $MnO_2$ vis-à-vis des ions $NO_2^-$ générés à la cathode par réduction des ions $NO_3^-$.

Quelque soit le milieu lixiviant, les rendements de lixiviation du $MnO_2$ atteignent, à 1000A/m$^2$, plus de 97% pour des rendements faradiques proches de 95%.

Exemple 4: Electrolixiviation de catalyseurs usés $TiO_2$-Mo.

L'échantillon de catalyseur traité présente l'analyse chimique suivante:47,5% Ti; 5,8% Mo; 2,7% Si et 2035 g/t As. L'objectif est de récupérer le molybdène sous forme d'une solution pure de molybdate de soude et de produire un résidu de $TiO_2$ recyclable titrant moins de 0,4% Mo et surtout moins de 30ppm As.

La lixiviation directe du catalyseur à 90°C, dans des solutions titrant au moins 1,25 M NaOH a permis d'arriver à des rendements de lixiviation du molybdène et de l'arsenic très élevés, environ 93%.

Grâce à un prétraitement réducteur du catalyseur dans la cellule d'électrolixiviation, en milieu acide (pH 1,5) et à température ambiante, l'objectif est atteint lors de la lixiviation alcaline ultérieure, le résidu final titrant 0,23% Mo et 23% ppm As. Lors du prétraitement, la consommation électrique atteint 600 kWh/t de catalyseur.

Exemple 5: Traitement de terres chargées en métaux réfractaires

L'échantillon de terre traité présente l'analyse suivante: 15,76% Fe, 1,17% Pb, 1,28% Zn, 0,1% Cu, 70 ppm Hg, 80 ppm As, 46 ppm Cd, 260 ppm Ni et 392 ppm Cr.

Les essais sont réalisés à température ambiante, pendant deux heures, à 200 A/m$^2$ et avec une dilution de 5l/kg. La pulpe a été introduite dans le compartiment anodique rempli d'une anode en titane platiné. L'électro-oxydation en milieu chlorhydrique (100g/l HCl) permet de récupérer 91,4% Hg; 95% Cu; 76% Ni; 94,4% Pb; 94,3 %Zn; 94,2% Cd; 57,2% Cr; 24,6% As et 42,4% Fe, le solide final titrant 13,9% Fe; 0,1% Pb; 0,12% Zn; 92 ppm Cu, 115 ppm Ni, 116 ppm As et moins de 5 ppm de mercure et de cadmium, soit un ensemble de teneurs acceptables pour envisager l'utilisation de cette terre comme matériau de construction.

La perte en poids s'élève à environ 37% et la consommation électrique à 250kWh/t de terre traitée.

**Revendications**

1. Cellule électrochimique de type filtre-presse destinée en particulier à l'électrolixiviation de métaux comportant au moins une première et une seconde électrode, caractérisée en ce que au moins une électrode est tridimensionnelle, l'électrode tridimensionnelle comprenant une superposition d'au moins une première grille ondulée et d'au moins une deuxième grille plane en métal, l'ondulation de la première grille et la distance entre la première et la deuxième grille étant agencée de façon à permettre le passage de pulpes.

2. Cellule électrochimique suivant la revendication 1, caractérisée en ce qu'elle comprend au moins un compartiment cathodique dans lequel se trouve l'électrode ayant la fonction de cathode et au moins un compartiment anodique dans lequel se trouve l'électrode ayant la fonction d'anode, lesdits compartiments étant séparés par un séparateur perméable aux protons, d'une résistivité de surface comprise entre 0,3 et 2 $\Omega.cm^2$.

3. Cellule électrochimique, suivant les revendications 1 ou 2, caractérisée en ce que ladite électrode tridimensionnelle comprend la superposition alternée de trois éléments d'électrodes ondulées et de deux éléments d'électrodes planes.

4. Cellule électrochimique, suivant l'une des revendications 1 à 3, dans laquelle l'électrode tridimensionnelle est en métal déployé, caractérisée en ce que le métal déployé est choisi parmi les métaux suivants: zinc, cuivre, nickel, titane platiné, acier inoxydable.

5. Cellule électrochimique, suivant les revendications 1 à 4, caractérisée en ce que ladite électrode tridimensionnelle comprend des éléments d'électrodes reliés entre eux et fixés sur une plaque plane collectrice de courant, l'épaisseur de l'électrode tridimensionnelle étant comprise entre 3 et 25 mm, est, en particulier, de 14 mm.

6. Cellule électrochimique suivant l'une des revendications 1 à 5, caractérisée en ce que la seconde électrode est composée d'une électrode plane pourvue de stries orientées suivant un sens sensiblement parallèle à celui suivant lequel les pulpes sont amenées à circuler.

7. Cellule électrochimique suivant l'une des revendications 1 à 6, caractérisée en ce que la seconde électrode est composée d'un matériau choisi parmi les suivants: titane-platine, plomb-argent dans lequel le pourcentage d'argent dans l'alliage plomb-argent est de 0,2 à 1%.

8. Cellule électrochimique suivant l'une des revendications 1 à 7, dans lequel le mode d'introduction et de sortie de la pulpe est composé d'un système d'entrée/sortie transversale perpendiculaire à l'écoulement au sein de l'électrode tridimensionnelle, ce système d'entrée/sortie comporte un canal en queue d'aronde, terminé par une série de plusieurs conduits sensiblement parallèles répartis sur la largeur de la cellule, assurant une distribution sensiblement uniforme de la pulpe dans l'électrode tridimensionnelle et une zone de transition à la sortie de ces conduits favorisant la fluidité de la pulpe et évitant sensiblement le bouchage.

9. Procédé d'électrolixiviation des pulpes selon la revendication 8, caractérisé en ce qu'on applique à une cellule électrochimique une densité de courant située entre 1000 et 1500A/m$^2$, le débit de circulation du catholyte étant d'au moins 2m$^3$/h dans chaque compartiment, le débit de circulation de l'anolyte étant d'au moins 2,5m$^3$/h, dans chaque compartiment.

10. Procédé d'électrolixiviation des pulpes suivant la revendications 9, caractérisé en ce que le mode de connexion électrique de la cellule électrochimique est bipolaire.

FIGURE 1

FIGURE 2a

FIGURE 2b

## FIGURE 3

FIGURE 4

28a

28b

28c

29a

29b

30

vue de face électrode

31

pulpe

FIGURE 5

**Office européen des brevets**

**RAPPORT DE RECHERCHE EUROPEENNE**

Numéro de la demande

EP 99 20 0513

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
|---|---|---|---|
| A | EP 0 183 602 A (LOUYOT COMPTOIR LYON ALEMAND) 4 juin 1986 (1986-06-04) <br> * revendications 1,2,6,7; figures 10,11 * <br> * page 5, ligne 2 - ligne 5 * <br> * page 7, ligne 1 - ligne 2 * <br> --- | 1,4,9 | C22B3/00 <br> C22B3/02 <br> C22B7/00 <br> C22B47/00 <br> C25B11/02 <br> C25B9/00 |
| A | FR 554 385 A (SCOTT J.P.) 9 juin 1923 (1923-06-09) <br> * le document en entier * <br> --- | 1 | |
| A | BROWN C J ET AL: "STUDIES OF THREE-DIMENSIONAL ELECTRODES IN THE FMO1-LC LABORATORY ELECTROLYSER" JOURNAL OF APPLIED ELECTROCHEMISTRY, vol. 24, 1994, pages 95-106, XP002913134 ISSN: 0021-891X <br> * abrégé; figures 1,2; tableau 1 * <br> --- | 1 | |
| A | GB 2 240 988 A (OLIN CORP) 21 août 1991 (1991-08-21) <br> * revendications 1,4,7,10,13-16; figures; exemples; tableaux * <br> --- | 1,4-10 | **DOMAINES TECHNIQUES RECHERCHES** <br> <br> C25C <br> C25B <br> C22B |
| A | US 4 274 939 A (BJAEAREKLINT AKE B) 23 juin 1981 (1981-06-23) <br> * abrégé; figures * <br> ----- | 1,7 | |

Le présent rapport a été établi pour toutes les revendications

| Lieu de la recherche | Date d'achèvement de la recherche | Examinateur |
|---|---|---|
| LA HAYE | 19 juillet 1999 | Ceulemans, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 20 0513

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-07-1999

| Document brevet cité au rapport de recherche | Date de publication | Membre(s) de la famille de brevet(s) | Date de publication |
|---|---|---|---|
| EP 0183602 A | 04-06-1986 | FR 2573221 A | 16-05-1986 |
| FR 554385 A | 09-06-1923 | AUCUN | |
| GB 2240988 A | 21-08-1991 | US 4743350 A | 10-05-1988 |
| | | CA 1295284 A | 04-02-1992 |
| | | FI 875566 A,B, | 20-06-1988 |
| | | GB 2200652 A,B | 10-08-1988 |
| | | GB 2239660 A,B | 10-07-1991 |
| | | HK 26892 A | 16-04-1992 |
| | | HK 27192 A | 24-04-1992 |
| | | SE 8705021 A | 20-06-1988 |
| | | SE 9101400 A | 09-11-1992 |
| | | SE 9101401 A | 09-11-1992 |
| | | US 4740287 A | 26-04-1988 |
| US 4274939 A | 23-06-1981 | SE 418508 B | 09-06-1981 |
| | | CH 645138 A | 14-09-1984 |
| | | DE 3014885 A | 06-11-1980 |
| | | FR 2454474 A | 14-11-1980 |
| | | GB 2047743 A,B | 03-12-1980 |
| | | JP 1284937 C | 09-10-1985 |
| | | JP 55148783 A | 19-11-1980 |
| | | JP 60009110 B | 07-03-1985 |
| | | NL 8002136 A,B | 22-10-1980 |
| | | SE 7903503 A | 21-10-1980 |

EPO FORM P0460

Pour tout renseignement concernant cette annexe : voir Journal Officiel de l'Office européen des brevets, No.12/82